# EUROPÄISCHE PATENTSCHRIFT

(11) **EP 1 948 479 B1**
(45) Veröffentlichungstag und Bekanntmachung des Hinweises auf die Patenterteilung: **15.08.2012**
(21) Anmeldenummer: 06818392.0
(22) Anmeldetag: 07.11.2006
(51) Int. Cl.: H04B 5/00

(54) **KONTAKTLOSE ABFRAGE VON SYSTEMZUSTÄNDEN**
NON-CONTACTING CHECKING OF SYSTEM STATES
INTERROGATION SANS CONTACT D'ETATS D'UN SYSTEME

(30) Priorität: 08.11.2005 DE 102005053543
(43) Veröffentlichungstag der Anmeldung: 30.07.2008
(73) Patentinhaber: Schleifring und Apparatebau GmbH, 82256 Fürstenfeldbruck (DE)
(72) Erfinder: KRUMME, Nils, 82340 Feldafing (DE)
(74) Vertreter: Lohr, Georg
(86) Internationale Anmeldenummer: PCT/EP2006/010633
(87) Internationale Veröffentlichungsnummer: WO 2007/054259

(56) Entgegenhaltungen:
- EP-A- 1 407 938
- EP-A1- 0 337 171
- EP-A1- 0 849 121
- WO-A-99/28158
- DE-A1- 19 614 161

## Beschreibung

### Technisches Gebiet

Die Erfindung bezieht sich auf kontaktlose Drehübertrager.

### Stand der Technik

Drehübertrager, oft auch Schleifringe genannt, dienen zur Übertragung von elektrischen Signalen zwischen gegeneinander drehbaren Teilen. Es sind verschiedene unterschiedliche Drehübertrager bekannt. So werden beispielsweise kontaktierende Schleifringe, bei denen Metall- oder Kohlebürsten auf meist metallischen Schleifbahnen laufen zur galvanischen Übertragung eingesetzt. Kontaktlose Drehübertrager basieren auf dem Prinzip der induktiven oder kapazitiven Kopplung. Diese Drehübertrager sind gegenüber den kontaktierenden Schleifringen nahezu verschleißfrei, da ein mechanischer Kontakt zwischen den beiden drehbaren Teilen nicht notwendig ist. Aufgrund der physikalischen Trennung der beiden drehbaren Teile lassen sich derartige Drehübertrager auch hervorragend gegenüber Umwelteinflüssen kapseln. Nachteilig an kontaktlosen Drehübertragern ist der gegenüber mechanischen Schleifringen meist wesentlich höhere Aufwand.

In der DE 100 84 415 T1 ist ein kontaktloser Drehübertrager für das Lenkrad eines Kraftfahrzeugs offenbart. Mittels Schleifenantennen im Kraftfahrzeug und im Lenkrad wird ein auf einem Träger moduliertes Taktsignal vom Kraftfahrzeug in das Lenkrad übertragen. Zur Signalisierung von Schalterzuständen des Lenkrads erfolgt durch einen im Lenkrad integrierten Impulsschalter eine Bedämpfung der Schleifenantennen. Diese kann auf Seiten des Kraftfahrzeugs durch eine entsprechende Abnahme der Signalamplitude detektiert werden. Die Energieversorgung der Elektronik im Lenkrad erfolgt mittels eines separaten galvanischen Drehübertragers. Würde eine solche Energieversorgung ebenfalls kontaktlos realisiert, so wären zusätzliche Bauteile notwendig.

Das Dokument EP 1407938 wird als nächtliegender Stand der Technik angesehen und zeigt die Merkmale der Präambel des unabhängigen Anspruchs 1.

Die Aufgabe der Erfindung ist es, ein gegenüber dem Stand der Technik weiter vereinfachtes System zur Abfrage von Systemzuständen wie Schalterstellungen zwischen einem feststehenden und einem rotierenden Teil zu gestalten, wobei auf eine zusätzliche Energieversorgung der Komponenten des rotierenden Teils verzichtet werden kann.

Eine erfindungsgemäße Lösung dieser Aufgabe ist in den unabhängigen Patentansprüchen angegeben. Weiterbildungen der Erfindung sind Gegenstand der abhängigen Ansprüche.

Eine erfindungsgemäße Vorrichtung zur berührungslosen Abfrage von Systemzuständen eines drehbaren Teiles 20, welches gegenüber einem feststehenden Teil 10 drehbar ist, basiert auf induktiver Kopplung. Das feststehende Teil 10 umfasst eine erste Spule 11, die von einem Signalgenerator 12 gespeist wird. Mit der ersten Spule 11 magnetisch verkoppelt ist eine zweite Spule 21, die auf dem drehbaren Teil 20 angeordnet ist. Die Spulen können wahlweise als einfache Leiterschleife, als Spulen mit bifilaren Wicklungen, die ein lokal begrenztes Feld aufgrund antiparalleler Ströme ausbilden, als Luftspulen oder auch als Spulen mit Eisen- bzw. Ferritkernen realisiert sein. Ebenso sind auch Kombinationen verschiedener Spulentypen möglich. Wesentlich ist hierbei die magnetische Verkopplung der ersten Spule 11 mit der zweiten Spule 21. Die zweite Spule 21 ist mittels wenigstens einer Kapazität 22 zu einem Resonanzkreis ergänzt. Diese wenigstens eine Kapazität 22 kann als diskrete Bauelement ausgeführt sein. Ebenso kann sie aber auch eine parasitäre Kapazität der Anordnung sein. Weiterhin ist wenigstens ein Schaltelement (23a, 23b) vorgesehen, welches wenigstens eine weitere Impedanz (24a, 24b) an diesen Resonanzkreis schaltet. Die Beschaltung kann hier wahlweise in Serienschaltung oder auch in Parallelschaltung erfolgen. Ein Schaltelement kann beispielsweise ein Halbleiterschalter oder auch ein mechanischer Kontakt sein. Der Begriff der Impedanz bezieht sich hier auf ein elektronisches Bauteil, welches eine reelle und/oder imaginäre Impedanz aufweist. Dies kann beispielsweise eine Induktivität, eine Kapazität oder auch ein Widerstand sein. Ebenso sind auch Kombinationen, wie beispielsweise ein Resonanzkreis aus einer Induktivität und einer Kapazität möglich. Ebenso sind auch komplexere Resonanzkreise aus Serienschaltungen und Parallelschaltungen mit mehreren Resonanzen möglich. Wesentlich ist hierbei, dass zumindest eine elektrische Eigenschaft des Resonanzkreises durch die Zuschaltung der wenigstens einen weiteren Impedanz verändert wird. Besonders günstig ist es, wenn die zumindest eine elektrische Eigenschaft des Resonanzkreises wesentlich, bevorzugt um den Faktor zwei, besonders bevorzugt um den Faktor 10 verändert wird, so dass ein deutlicher Messeffekt erzeugt wird.

Erfindungsgemäß wird nun ein Signalgenerator 12, der den feststehenden Teil 10 zugeordnet ist, in seiner Frequenz derart verändert, bis wenigstens eine Resonanzfrequenz der Anordnung erreicht ist. Es kann sich hierbei um eine Serienresonanz oder auch eine Parallelresonanz handeln. Die Steuerung des Signalgenerators erfolgt mittels einer Auswerteeinrichtung 13, welche weiterhin Mittel zur Feststellung einer Resonanzfrequenz aufweist. Dies können beispielsweise Mittel zur Messung der Stromamplitude, der Spannungsamplitude, des zeitlichen Stromverlaufs, dessen zeitlichen Spannungsverlaufs oder auch der Impedanz sein. Optional kann zur Ermittlung einer Resonanzfrequenz neben der Frequenz auch ein Strom, eine Spannung und/oder eine Impedanz des Resonanzkreises bestimmt werden. Aus der Frequenz beziehungsweise einer anderen elektrischen Größe kann nun auf das jeweilige aktivierte elektrische Schaltelement (23a, 23b) rückgeschlossen werden. Wird beispielsweise im Falle eines Parallelresonanzkreises durch ein Schaltelement eine weitere Resonanzkapazität parallel zu der wenigstens einen Kapazität 22 geschaltet, so reduziert sich die Resonanzfrequenz des Paralleleresonanzkreises entsprechend. Aus der neuen Resonanzfrequenz kann nun der Wert der Kapazität bestimmt und somit auf das hierzu aktivierte Schaltelement rückgeschlossen werden. Ebenso könnte beispielsweise eine Tabelle in der Auswerteeinrichtung vorgesehen sein, in welcher der direkte Zusammenhang zwischen einer Resonanzfrequenz und dem hierzu aktivierten Schaltelement enthalten ist. Eine entsprechende Auswertung ist ebenso auch im Falle einer Parallelschaltung einer Induktivität oder auch im Falle einer weiteren Serienschaltung einer Induktivität oder einer Kapazität zu der wenigstens einen Kapazität 22 durchzuführen. Analoges gilt auch für eine Ausgestaltung mit Serienresonanzkreis. Wird nun beispielsweise anstelle einer Induktivität oder einer Kapazität ein Widerstand parallel oder in Serie zum Resonanzkreis geschaltet, so ändert sich die Dämpfung des Resonanzkreises bei der Resonanzfrequenz, die durch eine Messung von wenigstens einer elektrischen Spannung oder einem elektrischen Strom oder einer Impedanz durch die Auswerteeinrichtung 13 ermittelt werden kann. Auch hieraus kann wieder, wie zuvor be-reits beschrieben, auf das Schaltelement rückgeschlossen werden.

Eine weitere erfindungsgemäße Vorrichtung umfasst anstelle des zuvor beschriebenen steuerbaren Signalgenerators 12 einen frei schwingenden Signalgenerator, dessen Frequenz durch den Resonanzkreis bestimmt wird. Wird nun durch wenigstens ein Schaltelement eine weitere, vorzugsweise imaginäre Impedanz an den Resonanzkreis geschaltet, so ändert sich die Resonanzfrequenz des Resonanzkreises und damit auch die Arbeitsfrequenz des Signalgenerators entsprechend. Eine Auswertung kann durch die Auswerteeinrichtung 13 wie zuvor beschriebenen ausgeführt werden.

In einer weiteren erfindungsgemäßen Vorrichtung ist ein Signalgenerator 12 vorgesehen, der innerhalb eines vorgegebenen Frequenzbereichs, gesteuert durch die Auswerteeinrichtung in seiner Arbeitsfrequenz verändert werden kann. Weiterhin weist die Auswerteeinrichtung Mittel zur Messung von wenigstens einem elektrischen Parameter wie Frequenz, Amplitude, Phase an der ersten Spule auf. Diese Messung an unmittelbar an der ersten Spule, aber auch mittelbar, beispielsweise entkoppelt durch weitere elektronische Bauteile erfolgen. Durch die Auswertung der Messergebnisse, wie bereits zuvor beschrieben, ist ebenfalls ein Rückschluss auf das jeweilige aktivierte Schaltelement möglich. Beispielsweise kann bei einer bestimmten, vorzugsweise bei mehreren Frequenzen eine Dämpfung oder aber auch eine Impedanz, vorzugsweise nach Betrag und Phase bestimmt werden. So ist es besonders vorteilhaft, aus Betrag und Phase der Impedanz auf die entsprechenden Impedanzen, beziehungsweise die an den Resonanzkreis angeschlossenen Induktivitäten, Kapazitäten oder Widerstände und somit auf die aktivierten Schaltelemente rückzuschlie-ßen.

Eine weitere erfindungsgemäße Vorrichtung weist einen Signalgenerator 12 auf, der von einer Auswerteeinrichtung 13 derart gesteuert wird, dass dieser Signale mehrerer Frequenzen abgibt. Weiterhin ist die Auswerteeinrichtung 13 derart gestaltet, dass sie aufgrund der Messung von wenigstens einem elektrischen Parameter wie Frequenz, Amplitude, Phase an der ersten Spule wenigstens eine, vorzugsweise aber mehrere unterschiedliche Resonanzfrequenzen erkennen und daraus auf die aktivierten Schaltelemente schließen kann. Die von dem Signalgenerator 12 abgegebenen Signale können beispielsweise Pulse, vorzugsweise kurze Pulse, breitbandiges Rauschen oder auch mehrfrequente Signale, die Frequenzanteile auf den möglichen Resonanzfrequenzen der Anordnung aufweisen, sein. Die Auswertung erfolgt nun vorzugsweise frequenzselektiv, beispielsweise durch Filterung mit diskreten Filtern oder auch eine Fouriertransformation. Durch eine solche Ausgestaltung können in kurzer Zeit beziehungsweise gleichzeitig verschiedene Schaltzustände erkannt werden.

In einer besonders vorteilhaften Ausgestaltung der Erfindung ist wenigstens ein Mittel zur Plausibilitätskontrolle vorgesehen. Dies kann beispielsweise Bestandteil der Auswerteeinrichtung 13 sein. Zur Plausibilitätskontrolle werden die Ergebnisse durchgeführter Messungen mit vorgegebenen Sollwerten verglichen. Sind beispielsweise im Falle von zwei Schaltelementen insgesamt vier Resonanzfrequenzen der Anordnung möglich, so können diese mit vorgegebenen Sollfrequenzen verglichen werden. Liegen die tatsächlich ermittelten Resonanzfrequenzen innerhalb eines zulässigen Toleranzfeldes um die Sollfrequenzen, so kann ein gültiges Messsignal signalisiert werden. Liegen diese aber außerhalb eines zulässigen Toleranzfeldes, so kann ein Fehler in der Messung signalisiert werden. Mit dieser Ausgestaltung können beispielsweise Unterbrechungen oder Kurzschlüsse im Leitungssystem, erhöhte mechanische Toleranzen zwischen dem gegeneinander beweglichen Teilen oder sonstige Störungen beziehungsweise eine Alterung der Bauteile erkannt und signalisiert werden. Ebenso kann ein Fehler signalisiert werden, wenn gar keine Resonanz mehr möglich ist, beziehungsweise außerhalb eines vorgegebenen Frequenzbereichs liegt.

Wie zuvor beschrieben, können einzelne Systemzustände berührungslos abgefragt werden. Ebenso können mit einer erfindungsgemäßen Vorrichtung auch beliebige digitale Informationen berührungslos übertragen werden. Übertragung kann beispielsweise durch zeitlich gesteuerte Aktivierung beziehungsweise Deaktivierung eines Schaltelements oder auch mehrere Schaltelemente gleichzeitig erfolgen. Werden mehrere Schaltelemente gleichzeitig aktiviert, so können mehrere Bits an Informationen gleichzeitig übertragen werden.

In einer anderen Ausgestaltung einer erfindungsgemäßen Vorrichtung kann zusätzlich Hilfsenergie zur Versorgung von elektronischen Komponenten auf der Seite des drehbaren Teils 20 aus der zweiten Spule 21 ausgekoppelt werden. Die eigentliche Kodierung und Übertragung von Informationen entsprechend der Erfindung erfolgt jedoch ohne eine solche Auskopplung zusätzlicher Hilfsenergie.

Eine erhöhte Genauigkeit der Auswertung kann durch Referenzmessung erreicht werden. So kann beispielsweise eine erste Impedanz mit einem Referenzkanal umfassend eine von einem weiteren ersten Signalgenerator 12 gespeiste weitere erste Spule 11 sowie eine damit gekoppelte weitere zweite Spule 21 vermessen werden und durch einen Umschalter mit dem eigentlichen Messkanal verbunden werden.

Eine weitere Ausgestaltung einer erfindungsgemäßen Vorrichtung besteht darin, dass wahlweise die erste Spule 11 und/oder die zweite Spule 21 mehrere Teilspulen umfasst. Diese Teilspulen sind ebenfalls magnetisch miteinander verkoppelbar. So kann beispielsweise eine erste Teilspule der ersten Spule 11 vom Signalgenerator 12 gespeist werden, während eine zweite Teilspule der ersten Spule 11 von der Auswerteeinrichtung 13 benutzt wird. Ebenso können an verschiedenen Teilspulen der zweiten Spule 21 unterschiedliche Impedanzen mittels Schaltelementen angeschaltet werden. Die verschiedenen Teilspulen müssen nicht mechanisch starr miteinander verbunden werden, sondern können gegeneinander beweglich sein. Somit können die Systemzuständen von verschiedenen Teilen, die sich mit unterschiedlichen Geschwindigkeiten bewegen, beziehungsweise an verschiedenen Positionen befinden, abgefragt werden.

Ein erfindungsgemäßes Verfahren zur berührungslosen Abfrage von Systemzuständen eines gegenüber einem feststehenden Teil (10) drehbaren Teils (20) wobei das feststehende Teil (10) eine erste Spule (11) gespeist von einem Signalgenerator (12) und das drehbare Teil (20) eine zweite Spule (21) aufweist, die magnetisch mit der ersten Spule (11) verkoppelt ist, umfasst die folgenden Schritte:
— Ergänzen der zweiten Spule (21) durch wenigstens eine Kapazität zu einem Resonanzkreis,
— Hinzuschalten von wenigstens einer weiteren Impedanz durch wenigstens ein weiteres Schaltelement,
— Einspeisung von Signalen unterschiedlichen Frequenzen in die erste Spule (11),
— Messung einer elektrischen Größe an der ersten Spule (11) wie Strom, Spannung oder Impedanz,
— Ermittlung einer Resonanzfrequenz der Anordnung,
— Zuordnung der Resonanzfrequenz zu wenigstens einer weiteren Impedanz und somit zu dem diese hinzuschaltenden Schaltelement.

Aus Gründen der vereinfachten Darstellung wird hier auf die Übertragung zwischen einem feststehenden und einem drehenden Teil Bezug genommen. Grundsätzlich ist es jedoch eine Frage des Ortsbezugs, welches Teil sich gegenüber welchem Teil dreht. Es wäre auch möglich, dass sich beide Teile gegenüber einer festen Position auf der Erde drehen, wobei es wesentlich für die Erfindung ist, dass beide Teile gegeneinander drehbar sind. Ebenso ist die Erfindung auch für Linear gegeneinander bewegliche Einheiten anwendbar.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt in allgemeiner Form schematisch eine Vorrichtung zur kontaktlosen Abfrage von Systemzuständen.
Fig. 2 zeigt eine Variante der Erfindung mit mehreren Schaltelementen und mehreren weiteren Impedanzen als Kapazitäten.
Fig. 3 zeigt eine weitere Ausgestaltung der Erfindung mit in Serie geschalteten Impedanzen als Induktivitäten.
Fig. 4 zeigt eine weitere Ausgestaltung der Erfindung mit einer abstimmbaren Kapazität.
Fig. 5 zeigt eine andere Ausführungsform mit einem Resonanzkreis als Impedanz.

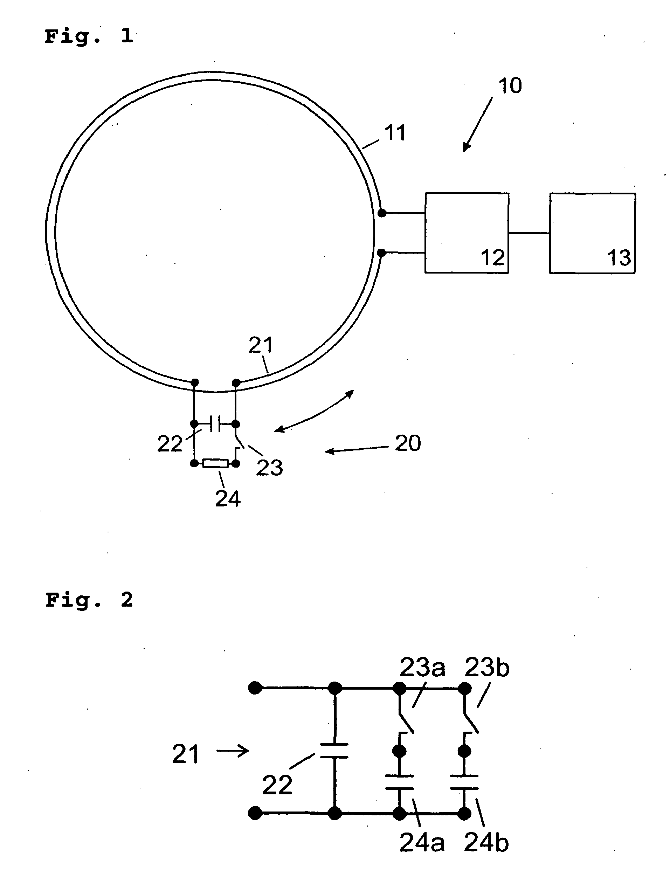

In Figur 1 ist schematisch in allgemeiner Form eine erfindungsgemäße Vorrichtung dargestellt. Den feststehenden Teil 10 zugeordnet sind eine erste Spule 11, welche durch einen Signalgenerator 12 gespeist wird, sowie eine Auswerteeinrichtung 13. Dem drehbaren Teil 20, welches gegenüber den feststehenden Teil 10 drehbar ist, ist eine zweite Spule 21 mit wenigstens einer Kapazität 22 sowie ein Schaltelement 23, welches eine Impedanz 24 an den Resonanzkreis anschalten kann, zugeordnet. Die beiden Spulen 11 und 21 sind magnetisch miteinander verkoppelt. Dies ergibt sich im hier dargestellten Beispiel alleine durch die nahe räumliche Anordnung. Zur Verbesserung der Verkopplung können neben Spulen aus mehreren Windungen wahlweise auch Ferrit- oder Eisenmaterialien eingesetzt werden. Bei geöffnetem Schaltelement 23 ist die zusätzliche Impedanz 24 vom Resonanzkreis entkoppelt. Daher wird die Resonanzfrequenz durch die zweite Spule 21 sowie die Kapazität 22 bestimmt. Bei geschlossenem Schaltelement 23 ist die Impedanz 24 parallel zu der zweiten Spule 21 und der Kapazität 22 geschaltet. Ist diese Impedanz 24 beispielsweise eine Kapazität, so verringert sich durch die höhere Gesamtkapazität des Parallelresonanzkreises die Resonanzfrequenz entsprechend.

In Figur 2 ist eine Variante der Erfindung mit mehreren Schaltelementen und mehreren weiteren Impedanzen als Kapazitäten dargestellt. Mit der zweiten Spule 21, die hier aus Gründen der Übersichtlichkeit nicht dargestellt ist, ist auch hier wieder eine Kapazität 22 parallel verbunden. Weiterhin sind hierzu parallel eine erste Serienschaltungen aus einem ersten Schaltelement 23a und einer ersten Impedanz 24a in Form einer Kapazität sowie einem zweiten Schaltelement 23b und einer zweiten Impedanz 24b ebenfalls in Form einer Kapazität geschaltet. Sind beide Schaltelemente geöffnet, so wird die Resonanzfrequenz des Resonanzkreises durch die Induktivität 21 und die Kapazität 22 bestimmt. Durch Schließen wenigstens eines Schaltelements kann durch das hinzuschalten der entsprechenden Kapazität die Resonanzfrequenz verringert werden. Durch hinzuschalten der zweiten Kapazität kann die Resonanzfrequenz weiter reduziert werden. Durch eine geeignete Dimensionierung der Kapazitäten ergeben sich bei jeder Kombination der Schalterstellungen charakteristische Resonanzfrequenzen. So ist vorteilhafterweise die Kapazität 24a doppelt so groß wie die Kapazität 22 und die Kapazität 24b viermal so groß wie die Kapazität 22. Würden in diesem Beispiel anstelle der Kapazitäten Induktivitäten eingesetzt werden, so würde sich die Resonanzkreisinduktivität durch Parallelschaltung im Falle geschlossener Schaltelemente reduzieren und die Resonanzfrequenz entsprechend erhöhen. Es können auch Induktivitäten und Kapazitäten miteinander kombiniert werden. So könnte beispielsweise in Serie zu dem Schaltelement 23a anstelle der eingezeichneten Kapazität 24a eine Induktivität geschaltet sein. Damit würde bei geschlossenem Schaltelement 23a die Resonanzfrequenz gegenüber der Resonanzfrequenz bei offenen Schaltelementen höher werden. Bei einem geschlossenen Schaltelement 23b in Serie zur Kapazität 24b würde sich die Resonanzfrequenz verringern.

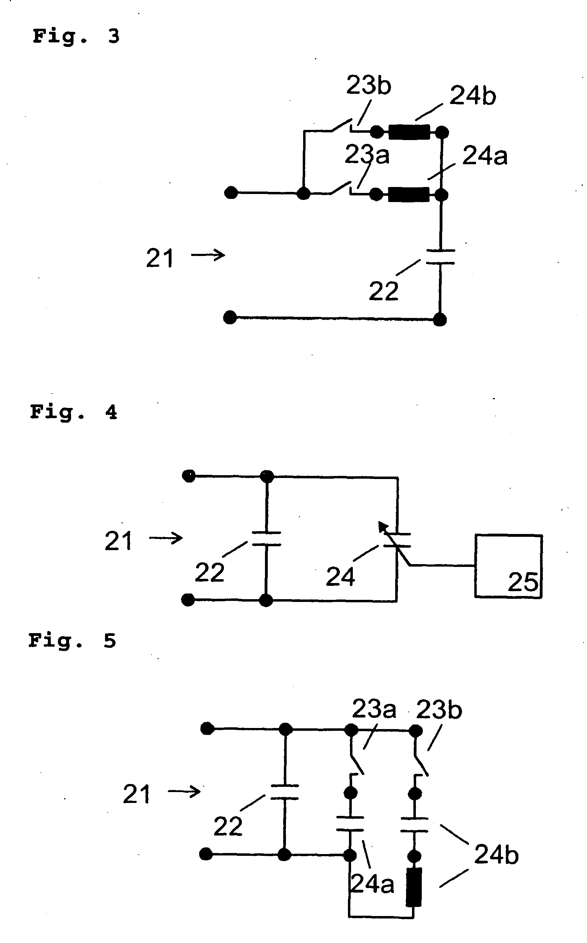

Figur 3 zeigt eine weitere Ausgestaltung der Erfindung mit in Serie geschalteten Impedanzen als Induktivitäten. Es können durch hinzuschalten der Induktivitäten 24a beziehungsweise 24b in Serie zur zweiten Spule 21 verschiedene Resonanzfrequenzen erzeugt werden. Im vorliegenden Fall ist der Resonanzkreis unterbrochen, wenn alle Schaltelemente geöffnet sind. Dem kann beispielsweise durch eine hier nicht weiter dargestellte Parallelschaltung einer Induktivität zu den Schaltelementen einschließlich der Induktivitäten abgeholfen werden. Es könnten auch die Induktivitäten 24a und 24b fest in Serie zwischen der zweiten Spule 21 und der Kapazität 22 geschaltet werden, wobei dann die Induktivität 24a durch ein zu dieser parallel geschaltetes Schaltelement 23a und die Induktivität 24b durch einen parallel zu dieser geschaltetes Schaltelement 24b überbrückt werden. Weiterhin könnten auch hier Induktivitäten und Kapazitäten miteinander kombiniert werden. Ebenso kann anstelle einer Induktivität als Impedanz auch ein resonanzfähiges Gebilde wie beispielsweise ein Resonanzkreis geschaltet werden. Dieses kann eine optionale Dämpfung in Form eines Widerstandes aufweisen.

Figur 4 zeigt eine weitere Ausgestaltung der Erfindung mit einer abstimmbaren Kapazität. Eine solche abstimmbare Kapazität kann beispielsweise eine Kapazitätsdiode ein aufgrund eines mechanischen Systemzustandes eingestellter Kondensatorwert (zum Beispiel der Plattenabstand eines Plattenkondensators) oder auch ein von einem Motor bewegter Drehkondensator sein. Diese abstimmbare Kapazität wird von einer Steuereinheit 25 gesteuert. Eine Steuerung kann beispielsweise entsprechend dem Messsignal eines Sensors sein. Entsprechend einer abstimmbaren Kapazität ist auch eine abstimmbare Induktivität oder auch ein veränderbarer Widerstand realisierbar. Hierbei kann beispielsweise die magnetische Konstante eines Ferrit- oder Eisenkerns durch ein überlagertes Gleichfeld oder durch mechanische Bewegung eines Kerns verändert werden. Es wäre auch ein Potentiometer einsetzbar. Ebenso können auch verlustbehafteten Magnetkerne herangezogen werden, durch die sich beispielsweise die Verluste einer Induktivität mit variabler Kernposition ändern.

Figur 5 zeigt eine andere Ausführungsform der Erfindung mit einem Resonanzkreis als Impedanz. Die Anordnung entspricht weitgehend der Anordnung aus Figur 2. Es ist hier jedoch anstelle der Kapazität ein Resonanzkreis bestehend aus einer Serienschaltung einer Induktivität und einer Kapazität für die Impedanz 24b vorgesehen. Auch hier kann, wie zuvor beschrieben, die Resonanzfrequenz der Anordnung bestimmt werden. Daraus lässt sich wieder auf die Kapazität bzw. Induktivität schließen.

### Bezugszeichenliste

- 10: feststehendes Teil
- 11: erste Spule
- 12: Signalgenerator
- 13: Auswerteeinrichtung
- 20: drehbares Teil
- 21: zweite Spule
- 22: Kapazität
- 23: Schaltelement
- 24: Impedanz
- 25: Steuereinheit

## Patentansprüche

1. Vorrichtung zur berührungslosen Abfrage von Systemzuständen eines gegenüber einem feststehenden Teil (10) drehbaren Teils (20), wobei das feststehende Teil (10) eine erste Spule (11) gespeist von einem Signalgenerator (12) und das drehbare Teil (20) eine zweite Spule (21) aufweist, die magnetisch mit der ersten Spule (11) verkoppelt ist,
**dadurch gekennzeichnet dass**,
die zweite Spule (21) mittels wenigstens einer Kapazität (22) zu einem Resonanzkreis ergänzt ist, und wenigstens ein Schaltelement (23a, 23b) vorgesehen ist, welches wenigstens eine weitere Impedanz (24a, 24b) an diesen Resonanzkreis anschaltet und weiterhin an dem feststehenden Teil (10) eine Auswerteeinrichtung (13) vorgesehen ist, welche den Signalgenerator (12) in der Frequenz verändert, bis wenigstens eine Resonanzfrequenz der Anordnung erreicht ist und aufgrund der wenigstens einen Resonanzfrequenz und/oder der Dämpfung der Anordnung auf den Zustand des wenigstens einen Schaltelements rückschließt.

2. Vorrichtung zur berührungslosen Abfrage von Systemzuständen entsprechend dem Oberbegriff des Anspruchs eins,
**dadurch gekennzeichnet dass**,
die zweite Spule (21) mittels wenigstens einer Kapazität (22) zu einem Resonanzkreis ergänzt ist, und wenigstens ein Schaltelement (23a, 23b) vorgesehen ist, welches wenigstens eine weitere Impedanz (24a, 24b) an diesen Resonanzkreis anschaltet und weiterhin an dem feststehenden Teil (10) eine Auswerteeinrichtung (13) vorgesehen ist, welche die Frequenz des als selbstschwingender Signalgenerator basierend auf dem Resonanzkreis aufgebauten Signalgenerators (12) auswertet und aufgrund der wenigstens einen Resonanzfrequenz und/oder der Dämpfung der Anordnung auf den Zustand des wenigstens einen Schaltelements rückschließt.

3. Vorrichtung zur berührungslosen Abfrage von Systemzuständen eines gegenüber einem feststehenden Teil (10) drehbaren Teils (20), wobei das feststehende Teil (10) eine erste Spule (11) gespeist von einem Signalgenerator (12) und das drehbare Teil (20) eine zweite Spule (21) aufweist, die magnetisch mit der ersten Spule (11) verkoppelt ist,
**dadurch gekennzeichnet dass**,
die zweite Spule (21) mittels wenigstens einer Kapazität (22) zu einem Resonanzkreis ergänzt ist, und wenigstens ein Schaltelement (23a, 23b) vorgesehen ist, welches wenigstens eine weitere Impedanz (24a, 24b) an diesen Resonanzkreis anschaltet und weiterhin an dem feststehenden Teil (10) eine Auswerteeinrichtung (13) vorgesehen ist, welche den Signalgenerator (12) innerhalb eines vorgegebenen Frequenzbereichs in der Frequenz verändert, und dabei Messungen von wenigstens einem der elektrischen Parameter Frequenz, Amplitude, Phase an der ersten Spule durchführt und basierend darauf auf den Zustand des wenigstens einen Schaltelements rückschließt.

4. Vorrichtung zur berührungslosen Abfrage von Systemzuständen eines gegenüber einem feststehenden Teil (10) drehbaren Teils (20), wobei das feststehende Teil (10) eine erste Spule (11) gespeist von einem Signalgenerator (12) und das drehbare Teil (20) eine zweite Spule (21) aufweist, die magnetisch mit der ersten Spule (11) verkoppelt ist,
**dadurch gekennzeichnet dass**,
die zweite Spule (21) mittels wenigstens einer Kapazität (22) zu einem Resonanzkreis ergänzt ist, und wenigstens ein Schaltelement (23a, 23b) vorgesehen ist, welches wenigstens eine weitere Impedanz (24a, 24b) an diesen Resonanzkreis anschaltet und weiterhin an dem feststehenden Teil (10) eine Auswerteeinrichtung (13) vorgesehen ist, welche den Signalgenerator (12) derart angesteuert, dass dieser ein mehrere Frequenzen aufweisendes Signal ausgibt, und dabei Messungen von wenigstens einem der elektrischen Parameter Frequenz, Amplitude, Phase an der ersten Spule durchführt und basierend darauf auf den Zustand des wenigstens einen Schaltelements rückschließt.

5. Vorrichtung nach einem der vorhergehenden Ansprüche,
**dadurch gekennzeichnet dass**,
Mittel zur Plausibilitätskontrolle durch Vergleich der ermittelten elektrischen Parameter mit vorgegebenen Werten vorgesehen sind, um im Falle starker Abweichungen Fehler an der Anordnung anzuzeigen.

6. Vorrichtung nach einem der vorhergehenden Ansprüche,
**dadurch gekennzeichnet dass**,
die weiteren Impedanzen derart dimensioniert sind, dass für alle Kombinationen der Schaltelemente (23a, 23b) eindeutige Resonanzfrequenzen auftreten.

7. Vorrichtung nach einem der vorhergehenden Ansprüche,
**dadurch gekennzeichnet dass**,
wahlweise die erste Spule 11 und/oder die zweite Spule 21 mehrere Teilspulen umfasst.

8. Verfahren zur berührungslosen Abfrage von Systemzuständen eines gegenüber einem feststehenden Teil (10) drehbaren Teils (20) wobei das feststehende Teil (10) eine erste Spule (11) gespeist von einem Signalgenerator (12) und das drehbare Teil (20) eine zweite Spule (21) aufweist, die magnetisch mit der ersten Spule (11) verkoppelt ist,
**gekennzeichnet durch** die folgenden Schritte:
— Ergänzen der zweiten Spule (21) **durch** wenigstens eine Kapazität zu einem Resonanzkreis,
— Hinzuschalten von wenigstens einer weiteren Impedanz **durch** wenigstens ein weiteres Schaltelement,
— Einspeisung von Signalen unterschiedlichen Frequenzen in die erste Spule (11),
— Messung einer elektrischen Größe an der ersten Spule (11) wie Strom, Spannung oder Impedanz,
— Ermittlung einer Resonanzfrequenz der Anordnung,
— Zuordnung der Resonanzfrequenz zu wenigstens einer weiteren Impedanz und somit zu dem diese hinzuschaltenden Schaltelement.

## Claims

1. A device for non-contacting interrogation of system states of a part (20) that is rotatable relative to a fixed part (10), with the fixed part (10) having a first coil (11) fed by a signal generator (12), and the rotatable part (20) having a second coil (21) that is magnetically coupled with the first coil (11),
**characterized in that**
the second coil (21) is supplemented to form a resonance circuit by means of at least one capacitance (22), and at least one switch element (23a, 23b) is provided that connects at least one further impedance (24a, 24b) to this resonance circuit, and an evaluation unit (13) is further provided on the fixed part (10), which changes the frequency of the signal generator (12) until at least one resonance frequency of the arrangement is reached and draws conclusions about the state of the at least one switch element on basis of the at least one resonance frequency and/or the attenuation of the arrangement.

2. A device for non-contacting interrogation of system states according to the preamble of claim 1,
**characterized in that**
i) the second coil (21) is supplemented to form a resonance circuit by means of at least one capacitance (22), and at least one switch element (23a, 23b) is provided that connects at least one further impedance (24a, 24b) to this resonance circuit, and an evaluation unit (13) is further provided on the fixed part (10) for evaluating the frequency of the signal generator (12), which is arranged as a freely oscillating signal generator based on the resonance circuit, and for drawing conclusions about the state of the at least one switch element from the at least one resonance frequency and/or the attenuation of the arrangement.

3. A device for non-contacting interrogation of system states of a part (20) that is rotatable relative to a fixed part (10), with the fixed part (10) having a first coil (11) fed by a signal generator (12), and the rotatable part (20) having a second coil (21) that is magnetically coupled with the first coil (11),
**characterized in that**
the second coil (21) is supplemented to form a resonance circuit by means of at least one capacitance (22), and at least one switch element (23a, 23b) is provided which connects at least one further impedance (24a, 24b) to this resonance circuit, and an evaluation unit (13) is further provided on the fixed part (10), which changes the frequency of the signal generator (12) within a predetermined frequency range and at the same time performs measurements of at least one of the electrical parameters of frequency, amplitude, and phase on the first coil, and based on this, draws conclusions about the state of the at least one switch element.

4. A device for non-contacting interrogation of system states of a part (20) that is rotatable relative to a fixed part (10), with the fixed part (10) having a first coil (11) fed by a signal generator (12), and the rotatable part (20) having a second coil (21) that is magnetically coupled with the first coil (11),
**characterized in that**
the second coil (21) is supplemented to form a resonance circuit by means of at least one capacitance (22), and at least one switch element (23a, 23b) is provided that connects at least one further impedance (24a, 24b) to this resonance circuit, and an evaluation unit (13) is further provided on the fixed part (10), which controls the signal generator (12) in such a way that it emits a signal having a plurality of frequencies and at the same time performs measurements of at least one of the electrical parameters of frequency, amplitude, and phase on the first coil, and based on this, draws conclusions about the state of the at least one switch element.

5. A device according to any one of the preceding claims,
**characterized in that**
means for plausibility check by comparing the determined electrical parameters with predetermined values are provided in order to indicate faults of the arrangement in the case of large deviations.

6. A device according to any one of the preceding claims,
**characterized in that**
the further impedances are dimensioned in such a way that distinct resonance frequencies occur for all combinations of the switch elements (23a, 23b).

7. A device according to any one of the preceding claims,
**characterized in that**
optionally the first coil 11 and/or the second coil 21 comprise a plurality of coil sections.

8. A method for non-contacting interrogation of system states of a part (20) that is rotatable relative to a fixed part (10), with the fixed part (10) having a first coil (11) fed by a signal generator (12), and the rotatable part (20) having a second coil (21) that is magnetically coupled with the first coil (11),
**characterized by** the following steps:
- supplementing the second coil (21) with at least one capacitance to form a resonance circuit;
- adding of at least one further impedance by using at least one further switch element;
- feeding signals of different frequencies into the first coil (11);
- measuring an electrical parameter such as current, voltage, or impedance at the first coil (11);
- determining a resonance frequency of the arrangement;
- assigning the resonance frequency to at least one further impedance and thus to the switch element adding this impedance.

## Revendications

1. Dispositif pour la consultation sans contact d'états de système d'une partie rotative (20) par rapport à une partie stationnaire (10), dans lequel la partie stationnaire (10) est une première bobine (11) alimentée par un générateur de signaux (12) et la partie rotative (20) présente une deuxième bobine (21) qui est couplée magnétiquement à la première bobine (11),
**caractérisé en ce que** la deuxième bobine (21) est complétée au moyen d'au moins une capacité (22) pour former un circuit résonant et il est prévu au moins un élément de commutation (23a, 23b) qui connecte au moins une autre impédance (24a, 24b) à ce circuit résonant et il est prévu en outre sur la partie stationnaire (10) un dispositif d'analyse (13) qui modifie la fréquence du générateur de signaux (12) jusqu'à ce qu'au moins une fréquence de résonance du dispositif soit atteinte et déduit de l'au moins une fréquence de résonance et/ou de l'atténuation du dispositif l'état de l'au moins un élément de commutation.

2. Dispositif pour la consultation sans contact d'états de système selon le préambule de la revendication 1, **caractérisé en ce que** la deuxième bobine (21) est complétée au moyen d'au moins une capacité (22) pour former un circuit résonant et il est prévu au moins un élément de commutation (23a, 23b) qui connecte au moins une autre impédance (24a, 24b) à ce circuit résonant et il est prévu également sur la partie stationnaire (10) un dispositif d'analyse (13) qui interprète la fréquence du générateur de signaux (12) construit comme un générateur de signaux autohétérodyne basé sur le circuit résonant et déduit de l'au moins une fréquence de résonance et/ou de l'atténuation du dispositif l'état de l'au moins un élément de commutation.

3. Dispositif pour la consultation sans contact d'états de système d'une partie rotative (20) par rapport à une partie stationnaire (10), dans lequel la partie stationnaire (10) est une première bobine (11) alimentée par un générateur de signaux (12) et la partie rotative (20) présente une deuxième bobine (21) qui est couplée magnétiquement à la première bobine (11),
**caractérisé en ce que** la deuxième bobine (21) est complétée au moyen d'au moins une capacité (22) pour former un circuit résonant et il est prévu au moins un élément de commutation (23a, 23b) qui connecte au moins une autre impédance (24a, 24b) à ce circuit résonant et il est prévu en outre sur la partie stationnaire (10) un dispositif d'analyse (13) qui modifie la fréquence du générateur de signaux (12) dans une plage de fréquences prédéterminée et effectue pendant ce temps des mesures d'au moins un des paramètres électriques de fréquence, d'amplitude et de phase sur la première bobine et en déduit l'état de l'au moins un élément de commutation.

4. Dispositif pour la consultation sans contact d'états de système d'une partie rotative (20) par rapport à une partie stationnaire (10), dans lequel la partie stationnaire (10) est une première bobine (11) alimentée par un générateur de signaux (12) et la partie rotative (20) présente une deuxième bobine (21) qui est couplée magnétiquement à la première bobine (11),
**caractérisé en ce que** la deuxième bobine (21) est complétée au moyen d'au moins une capacité (22) pour former un circuit résonant et il est prévu au moins un élément de commutation (23a, 23b) qui connecte au moins une autre impédance (24a, 24b) à ce circuit résonant et il est prévu en outre sur la partie stationnaire (10) un dispositif d'analyse (13) qui commande le générateur de signaux (12) de telle manière que celui-ci délivre un signal présentant plusieurs fréquences, et effectue pendant ce temps des mesures d'au moins un des paramètres électriques de fréquence, d'amplitude et de phase sur la première bobine et en déduit l'état de l'au moins un élément de commutation.

5. Dispositif selon l'une des revendications précédentes, **caractérisé en ce que** des moyens de contrôle de la plausibilité par comparaison des paramètres électriques déterminés avec des valeurs prédéfinies sont prévus afin d'indiquer des défauts du dispositif en cas d'écarts importants.

6. Dispositif selon l'une des revendications précédentes, **caractérisé en ce que** les autres impédances sont dimensionnées de telle façon que des fréquences de résonance univoques se produisent pour toutes les combinaisons des éléments de commutation (23a, 23b).

7. Dispositif selon l'une des revendications précédentes, **caractérisé en ce que** la première bobine (11) et/ou la deuxième bobine (21), au choix, comprennent plusieurs bobines partielles.

8. Procédé de consultation sans contact d'états de système d'une partie rotative (20) par rapport à une partie stationnaire (10), dans lequel la partie stationnaire (10) est une première bobine (11) alimentée par un générateur de signaux (12) et la partie rotative (20) présente une deuxième bobine (21) qui est couplée magnétiquement à la première bobine (11),
**caractérisé en ce qu'**il comprend les étapes suivantes :
- ajout à la deuxième bobine (21) d'au moins une capacité pour former un circuit résonant ;
- connexion d'au moins une autre impédance par l'intermédiaire d'au moins un autre élément de commutation ;
- fourniture de signaux de différentes fréquences à la première bobine (11) ;
- mesure d'une grandeur électrique sur la première bobine (11), telle que l'intensité, la tension ou l'impédance ;
- détermination de la fréquence de résonance du dispositif ;
- association de la fréquence de résonance à au moins une autre impédance et ainsi à cet élément de commutation à ajouter au circuit.
